# EUROPÄISCHE PATENTSCHRIFT

(11) **EP 2 789 892 B1**
(45) Veröffentlichungstag und Bekanntmachung des Hinweises auf die Patenterteilung: **01.02.2017**
(21) Anmeldenummer: 14156652.1
(22) Anmeldetag: 25.02.2014
(51) Int. Cl.: F16N 1/00, B26D 5/00, B26D 7/00, F16N 7/00, F16N 9/04, F16C 29/00

(54) **Verfahrschlitten für eine Linearführung**
Sliding carriage for a linear guide
Chariot pour un guidage linéaire

(30) Priorität: 08.04.2013 DE 102013206162
(43) Veröffentlichungstag der Anmeldung: 15.10.2014
(73) Patentinhaber: Weber Maschinenbau GmbH Breidenbach, 35236 Breidenbach (DE)
(72) Erfinder: Harder, Andreas, 35043 Marburg (DE)
(74) Vertreter: Manitz, Finsterwald & Partner GbR

(56) Entgegenhaltungen:
- WO-A1-2007/103761
- WO-A2-2007/002819
- DE-A1- 19 647 937
- DE-A1-102010 044 793
- DE-A1-102010 045 069
- US-A- 3 353 630

## Beschreibung

Die vorliegende Erfindung betrifft eine Produktzuführung einer Vorrichtung zur Verarbeitung von Lebensmittelprodukten, insbesondere eines Hochleistungs-Slicers, mit einem Verfahrschlitten, der durch eine Führung geführt ist und wenigstens eine Schmiermittelkammer für Schmiermittel zum Schmieren der Führung aufweist.

Solche geführten Verfahrschlitten werden beispielsweise bei Hochleistungs-Slicern dazu eingesetzt, einen oder mehrere Lebensmittelproduktriegel, wie z.B. Wurst- oder Käseriegel, einer Schneidebene zuzustellen, in welcher sich ein Schneidmesser bewegt. Speziell kann ein die Produkte haltender Produkthalter der Produktzuführung direkt am Verfahrschlitten angebracht und gemeinsam mit diesem bewegbar sein. In der Schmiermittelkammer des Verfahrschlittens vorhandenes Schmiermittel, bei welchem es sich beispielsweise um ein Fett oder Öl handeln kann, sorgt hierbei für ein verschleißarmes und leichtgängiges Verfahren des Verfahrschlittens an der Führung.

In der WO 2007/103761 A1 ist eine Aufschnittmaschine offenbart, deren Schlittenführung mit einem automatischen Schmiersystem versehen ist. Während des Betriebs einer Verarbeitungsvorrichtung tritt unweigerlich ein Verlust von Schmiermittel in der Schmiermittelkammer des Verfahrschlittens auf. Um ein unerwünschtes Trockenlaufen des Verfahrschlittens zu verhindern, ist daher ein regelmäßiges Auffüllen der Schmiermittelkammer erforderlich. Dieses Nachschmieren wird üblicherweise von einem Bediener der Anlage manuell durchgeführt.

Das manuelle Auffüllen der Schmiermittelkammer ist jedoch aus mehreren Gründen nachteilig. Zum einen besteht die Gefahr, dass das rechtzeitige Nachschmieren vergessen wird und so die Reibung an der Führung übermäßig ansteigt. Zum anderen ist das manuelle Nachschmieren nicht nur für den betreffenden Bediener lästig, sondern senkt aufgrund der damit verbundenen Stillstandszeiten auch die Wirtschaftlichkeit der Gesamtanlage.

Die DE 10 2010 044 793 A1 offenbart einen elektromechanischen Linearantrieb mit einer durch einen Elektromotor antreibbaren Gewindespindel, auf welcher eine Spindelmutter sitzt. Die Bewegung der Spindelmutter ist durch Endanschläge begrenzt, wobei an einem Endanschlag eine Öffnung zur Zufuhr von Schmiermittel an die Spindelmutter vorgesehen ist.

Es ist eine Aufgabe der Erfindung, bei geführten Verfahrschlitten von Produktzuführungen der genannten Art auch ohne das Erfordernis manuellen Nachschmierens einen zuverlässigen und verschleißarmen Verfahrbetrieb zu ermöglichen.

Die Lösung der Aufgabe erfolgt durch eine Produktzuführung mit den Merkmalen des Anspruchs 1.

Erfindungsgemäß ist eine Schmiermittel-Nachfüllstation vorgesehen, welche derart von dem Verfahrschlitten anfahrbar ist, dass über eine Schnittstelle automatisch Schmiermittel aus einer Schmiermittelquelle der Schmiermittel-Nachfüllstation in die Schmiermittelkammer des Verfahrschlittens übertragen wird. Der Verfahrschlitten ist also in eine Nachfüllposition verfahrbar, in welcher über eine Schnittstelle eine automatische Übertragung von Schmiermittel aus einer der Führung zugeordneten Schmiermittelquelle in die Schmiermittelkammer erfolgt. Durch die automatische Schmiermittelübertragung kann der während des Betriebs auftretende Verlust von Schmiermittel ausgeglichen werden. Es ist somit kein manuelles Nachschmieren erforderlich und die unerwünschten Stillstandszeiten der Lebensmittelverarbeitungsvorrichtung können gesenkt werden. Bei der Schnittstelle kann es sich um eine beliebige mechanische Einrichtung zur Übertragung eines fließfähigen Schmierstoffs zwischen zwei getrennten Bauteilen handeln.

Die Schmiermittelquelle kann sich dabei direkt in der Schmiermittel-Nachfüllstation befinden oder von der Schmiermittel-Nachfüllstation entfernt und mit dieser z.B. über eine Schmiermittelleitung verbunden sein. Die Schmiermittel-Nachfüllstation ermöglicht einen Verzicht auf manuelles Nachschmieren des geführten Verfahrschlittens, da bei einem übermäßigen Schmiermittelverlust aus der Schmiermittelkammer auf einfache Weise der Verfahrschlitten zu der Schmiermittel-Nachfüllstation gefahren werden kann, um ein automatisches Nachschmieren einzuleiten.

Die Erfindung sieht außerdem vor, dass eine Steuereinrichtung der Produktzuführung dazu ausgebildet ist, bei Erfüllung eines Nachfüllkriteriums ein Anfahren der Schmiermittel-Nachfüllstation durch den Verfahrschlitten auszulösen. Somit ist sichergestellt, dass der geführte Verfahrschlitten stets in optimaler Weise geschmiert ist. Ein Bediener der Anlage muss sich in keiner Weise um Belange des Nachschmierens kümmern.

Die Steuereinrichtung ist erfindungsgemäß dazu ausgebildet, bei Unterschreiten eines vorgegebenen Mindest-Füllstands oder Mindest-Drucks der Schmiermittelkammer ein Anfahren der Schmiermittel-Nachfüllstation durch den Verfahrschlitten auszulösen. Ein derartiges Überwachen der in der Schmiermittelkammer noch vorhandenen Schmiermittelmenge ermöglicht eine besonders zuverlässige Automatisierung des Nachschmierens.

Insbesondere kann die Schnittstelle einen am Verfahrschlitten vorgesehenen äußeren Schmiermitteleinlass, insbesondere Schmiernippel, umfassen, welcher über einen Schmiermittelkanal mit der Schmiermittelkammer verbunden ist. Über den Schmiermitteleinlass und den Schmiermittelkanal kann somit nachzufüllendes Schmiermittel von außen in die Schmiermittelkammer gelangen.

Gemäß einer Ausführungsform der Erfindung befindet sich die Nachfüllposition außerhalb eines durch zwei Endlagen definierten Betriebsbereichs, in welchem der Verfahrschlitten während eines Betriebs der Produktzuführung bewegt wird. Mit anderen Worten gelangt der Verfahrschlitten während des regulären Betriebs der zugehörigen Produktzuführung nicht in einen Kontakt mit der Schmiermittelquelle, so dass die Verfahrbewegung von der Schmiermittelquelle unbeeinflusst erfolgen kann. Außerdem ist auf diese Weise ein unkontrolliertes Zuführen von Schmiermittel in die Schmiermittelkammer während des regulären Verfahrbetriebs ausgeschlossen.

Eine weitere Ausführungsform der Erfindung sieht vor, dass der Verfahrschlitten an wenigstens einem Linearführungselement, insbesondere einer Führungsschiene, Führungsstange und/oder einer kombinierten Führungs-/Antriebsspindel, geführt ist. Eine solche Linearführung kann besonders einfach gestaltet sein. Sollte es die Anwendung erfordern, so könnte der Verfahrschlitten jedoch auch entlang einer gekrümmten Bahn geführt sein. Gemäß einer speziellen Ausgestaltung der Erfindung ist der Verfahrschlitten an zwei parallelen Führungsstangen geführt, wobei eine der Führungsstangen als Antriebsspindel ausgebildet ist und dem Vortrieb des geführten Verfahrschlittens dient, während die andere Führungsstange ausschließlich einer passiven Führung bzw. Stützung dient. Falls der Verfahrschlitten an mehreren Führungselementen geführt ist, ist es bevorzugt, dass für jedes der Führungselemente wenigstens eine eigene Schmiermittelkammer in dem Verfahrschlitten vorgesehen ist.

Gemäß einer weiteren Ausführungsform der Erfindung umfasst die Schnittstelle einen am Verfahrschlitten vorgesehenen äußeren Schmiermitteleinlass, insbesondere einen Schmiernippel, und einen an der Schmiermittel-Nachfüllstation vorgesehenen Schmiermittelauslass, insbesondere ein Mundstück. Mittels einer derartigen Anordnung aus Schmiernippel und Mundstück kann eine konstruktiv besonders einfache Schnittstelle zur Übertragung eines fließfähigen Schmierstoffs geschaffen werden. Vorzugsweise fluchtet der Schmiermitteleinlass mit dem Mundstück bezüglich der Verfahrrichtung. Somit kann das Anfahren der Schmiermittel-Nachfüllstation durch den Verfahrschlitten auf direktem geradlinigem Weg erfolgen. Es ist bevorzugt, dass die Verfahrbewegung des Schlittens selbst die für einen Pumpvorgang oder für eine Öffnung des Schmiermittelauslasses bei unter Druck gesetzter Schmiermittelquelle benötigte Energie liefert. Außer dem Anfahrvorgang selbst sind dann keine weiteren Maßnahmen für die Übertragung des Schmiermittels erforderlich.

Die Steuereinrichtung kann dazu ausgebildet sein, nach einer vorgegebenen Anzahl von betrieblichen Verfahrzyklen des Verfahrschlittens und/oder nach einer vorgegebenen Betriebszeitdauer ein Anfahren der Schmiermittel-Nachfüllstation durch den Verfahrschlitten auszulösen. Auf diese Weise kann sichergestellt werden, dass stets rechtzeitig vor einem Trockenlaufen der Führung ein Nachschmieren erfolgt.

Die Erfindung betrifft auch eine Vorrichtung zur Verarbeitung von Lebensmittelprodukten, insbesondere einen Hochleistungs-Slicer, welche wenigstens eine Produktzuführung wie vorstehend beschrieben umfasst.

Weiterbildungen der Erfindung sind auch in den abhängigen Ansprüchen, der Beschreibung sowie der beigefügten Zeichnung angegeben.

Nachfolgend wird die Erfindung beispielhaft unter Bezugnahme auf die Zeichnung beschrieben.
- Fig. 1: ist eine vereinfachte Draufsicht auf einen erfindungsgemäßen Hochleistungs-Slicer, welcher eine Produktzuführung mit einem durch eine Führung geführten Verfahrschlitten aufweist.
- Fig. 2: ist eine vergrößerte Schnittdarstellung des in Fig. 1 gezeigten Verfahrschlittens.
- Fig. 3: ist eine vergrößerte Teildarstellung der Vorrichtung gemäß Fig. 1, welche eine Schnittstelle zur automatischen Übertragung von Schmiermittel zwischen dem Verfahrschlitten und einer Schmiermittel-Nachfüllstation zeigt.

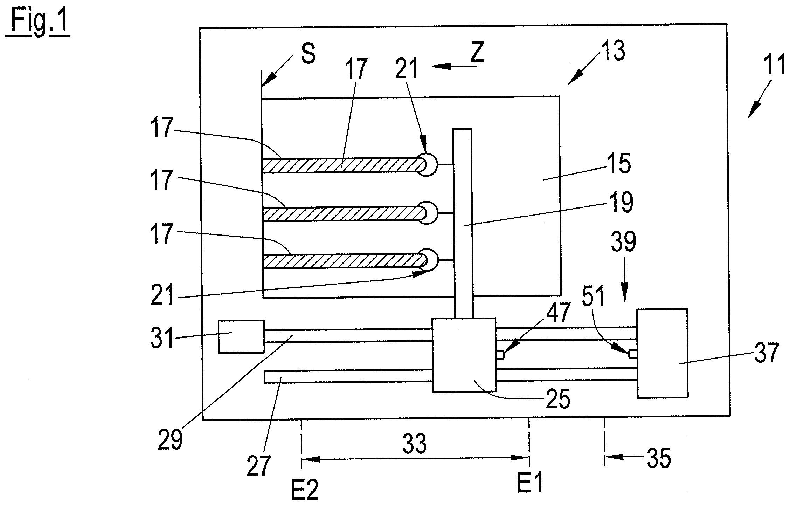

Der in Fig. 1 gezeigte Hochleistungs-Slicer 11 dient dazu, mehrere Lebensmittelprodukte 17, wie z.B. Wurst- oder Käseriegel, gleichzeitig mit hoher Schnittgeschwindigkeit in Produktscheiben aufzuschneiden. Hierzu ist eine Produktzuführung 13 vorgesehen, welche die Lebensmittelprodukte 17 entlang einer Produktförderrichtung Z einer Schneidebene S zuführt, in welcher sich ein nicht dargestelltes Schneidmesser, insbesondere rotierend und/oder umlaufend, bewegt. Die Produktzuführung 13 weist eine Auflagefläche 15 auf, auf welcher die Produkte 17 aufliegen. Weiterhin ist ein mit Greifkrallen-Anordnungen 21 versehener Produkthalter 19 vorgesehen, um den Produktvorschub zu bewerkstelligen oder zu unterstützen. Die Greifkrallen-Anordnungen 21 greifen wie dargestellt in die hinteren Enden der Lebensmittelprodukte 17 ein. Wenn gemäß einer alternativen Terminologie die einzelnen Anordnungen 21 als Produkthalter bezeichnet werden, dann kann der gemeinsame Halter 19, über den die einzelnen Produkthalter 21 mit dem Schlitten 25 verbunden sind, z.B. als Träger oder Balken bezeichnet werden.

Lediglich beispielhaft weist der dargestellte Produkthalter 19 drei Greifkrallen-Anordnungen 21 zum gleichzeitigen Halten dreier Lebensmittelprodukte 17 auf. Der Produkthalter 19 ist an einem Verfahrschlitten 25 befestigt, welcher an einer Führungsstange 27 sowie an einer kombinierten Führungs-/Antriebsspindel 29 entlang der Produktförderrichtung Z gleitend geführt ist. Die Führungs-/Antriebsspindel 29 ist durch einen Motor 31 angetrieben.

Zu Beginn eines Aufschneidevorgangs befindet sich der Verfahrschlitten 25 in einer ersten, im Bild rechten Endlage E1. Nach einer Bestückung des Produkthalters 19 mit Lebensmittelprodukten 17 wird der Verfahrschlitten 25 in der Produktförderrichtung Z bis zu der zweiten, im Bild linken Endlage E2 verfahren, wobei die Lebensmittelprodukte 17 kontinuierlich aufgeschnitten werden. Die beiden Endlagen E1, E2 definieren somit einen Betriebsbereich 33, innerhalb dessen sich der Verfahrschlitten 25 beim Aufschneiden von Lebensmittelprodukten 17 bewegt. Die Bewegung des Verfahrschlittens 25 wird durch eine in Fig. 1 nicht dargestellte elektronische Steuereinrichtung gesteuert.

Der Verfahrschlitten 25 kann auch in eine außerhalb des Betriebsbereichs 33 befindliche Nachfüllposition 35 verfahren werden, in welcher er sich in Kontakt mit einer Schmiermittel-Nachfüllstation 37 befindet. Hierbei erfolgt eine automatische Übertragung von Schmiermittel zwischen der Schmiermittel-Nachfüllstation 37 und dem Verfahrschlitten 25, wie nachfolgend noch genauer ausgeführt wird.

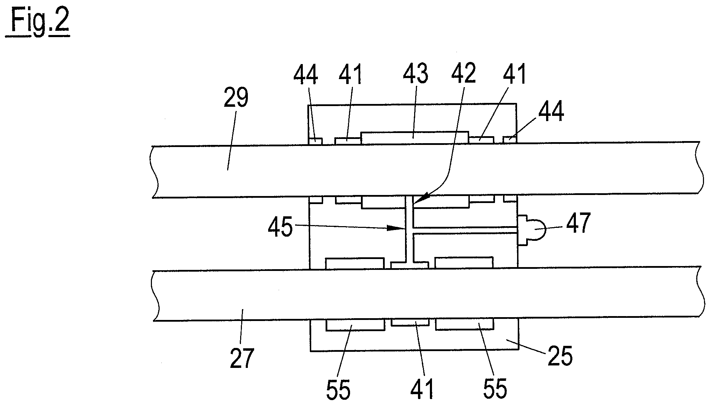

Wie aus der Schnittdarstellung gemäß Fig. 2 hervorgeht, sind in dem Verfahrschlitten 25 mehrere Schmiermittelkammern 41 ausgebildet, welche mit einem Schmiermittel, vorzugsweise mit Fett oder Öl, gefüllt sind. Die Schmiermittelkammern 41 sind zu den gleitenden Führungsflächen der Führungsstange 27 sowie der Führungs-/Antriebsspindel 29 hin geöffnet, um diese mit Schmiermittel zu beaufschlagen. Die der Führungs-/Antriebsspindel 29 zugeordneten Schmiermittelkammern 41 befinden sich hierbei beidseits einer Spindelmutter 43. Über einen Schmiermittelkanal 45 kann Schmiermittel von einem Schmiernippel 47 durch eine in der Spindelmutter 43 vorgesehene Durchführung 42 in die Spindelmutter 43 bzw. an die Kontaktflächen der Spindelmutter 43 gelangen. Von dort aus kann Schmiermittel in die angrenzenden Schmiermittelkammern 41 gelangen, so dass diese also indirekt mit dem Schmiermittelkanal 45 verbunden sind. Auf diese Weise kann eine Zufuhr von Schmiermittel von außen in die der Führungs-/Antriebsspindel 29 zugeordneten Schmiermittelkammern 41 erfolgen. Es sind ferner zwei ringförmige Abstreifelemente 44 vorgesehen. Für eine optimale Abdichtung weisen die Abstreifelemente 44 Vorsprünge auf, welche in die schraubenförmigen Nuten (nicht dargestellt) der Führungs-/Antriebsspindel 29 eingreifen.

Der Führungsstange 27 ist bei dem dargestellten Ausführungsbeispiel lediglich eine Schmiermittelkammer 41 zugeordnet, welche sich zwischen zwei Lagerbuchsen 55 befindet. Diese der Führungsstange 27 zugeordnete Schmiermittelkammer 41 steht direkt über den Schmiermittelkanal 45 mit dem Schmiernippel 47 in Verbindung, so dass auch hier eine Zufuhr von Schmiermittel von außen erfolgen kann. Prinzipiell können in einer abgewandelten Ausgestaltung auch die der Führungs-/Antriebsspindel 29 zugeordneten Schmiermittelkammern 41 alternativ oder zusätzlich direkt anstatt indirekt bzw. anstatt nur indirekt mit einem Schmiermittelkanal 45 verbunden sein.

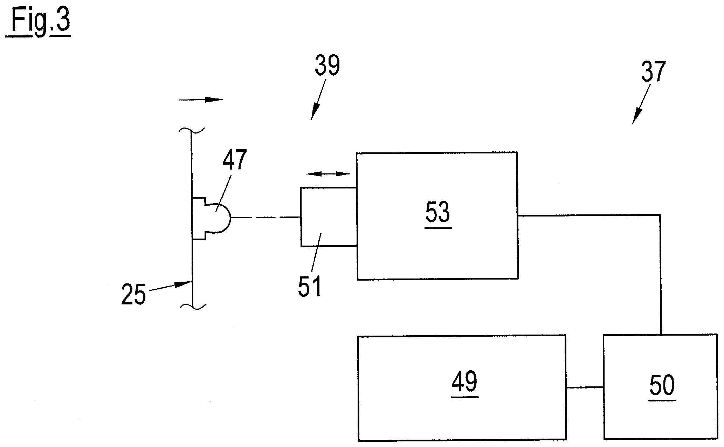

Wie aus Fig. 3 hervorgeht, umfasst die Schmiermittel-Nachfüllstation 37 einen Schmiermittelbehälter 49, eine Schmiermittelpumpe 50 sowie ein zu dem Schmiernippel 47 komplementäres Mundstück 51 als Schmiermittelauslass. Wie dargestellt fluchtet der Schmiernippel 47 des Verfahrschlittens 25 mit dem Mundstück 51 der Schmiermittel-Nachfüllstation 37, so dass durch den Schmiernippel 47 und das Mundstück 51 eine Schnittstelle 39 zur Übertragung von Schmiermittel gebildet ist. Das Mundstück 51 ist bezüglich eines Mundstücksitzes 53 der Schmiermittel-Nachfüllstation 37 beweglich, wie in Fig. 3 durch den Doppelpfeil verdeutlicht ist. Das Mundstück 51 ist hierbei durch eine nicht dargestellte Federeinrichtung in Richtung der im Bild linken Endlage vorgespannt. In dieser Endlage ist das Mundstück 51 verschlossen. Analog hierzu kann bei Bedarf auch der Schmiernippel 47 durch Bewegung gegenüber einem Schmiernippelsitz verschließbar und gegebenenfalls entsprechend federbelastet sein. Bei einer Bewegung des Mundstücks 51 gemäß Fig. 3 nach rechts erfolgt eine Öffnung des Mundstücks 51, welche einen durch die Schmiermittelpumpe 50 bewirkten Austritt von Schmiermittel aus dem Mundstück 51 zur Folge hat. Somit gerät bei einer Verfahrbewegung des Verfahrschlittens 25 in Fig. 3 nach rechts der Schmiernippel 47 in Eingriff mit dem Mundstück 51. Weiterhin drückt der Verfahrschlitten 25 das Mundstück 51 in eine Öffnungsstellung, so dass automatisch eine Übertragung von Schmiermittel aus dem Schmiermittelbehälter 49 über die Schnittstelle 39 und die Schmiermittelkanäle 45 in die Schmiermittelkammern 41 erfolgt.

Somit kann auf einfache Weise ein Auffüllen aller Schmiermittelkammern 41 des Verfahrschlittens 25 herbeigeführt werden, indem der Verfahrschlitten 25 über die erste Endlage E1 hinaus bis zu der Nachfüllposition 35 bewegt wird. Die Steuereinrichtung kann ein solches Anfahren der Schmiermittel-Nachfüllstation 37 durch den Verfahrschlitten 25 in regelmäßigen oder unregelmäßigen Abständen während des Betriebs des Hochleistungs-Slicers 11 veranlassen, um so ein automatisches Nachschmieren des Verfahrschlittens 25 zu bewerkstelligen. Beispielsweise kann die Steuereinrichtung nach einer vorgegebenen Anzahl von betrieblichen Verfahrzyklen des Verfahrschlittens 25 oder nach einer vorgegebenen Betriebszeitdauer des Hochleistungs-Slicers 11 ein Anfahren der Schmiermittel-Nachfüllstation 37 auslösen. Alternativ könnten auch Mittel zum Erfassen der in den Schmiermittelkammern 41 befindlichen Schmiermittelmenge vorgesehen sein, beispielsweise Mittel zum Erfassen eines Mindest-Füllstands oder eines Mindest-Drucks der Schmiermittelkammern 41. Die Steuereinrichtung könnte dann bei Unterschreiten eines vorgegebenen Mindest-Füllstands oder eines vorgegebenen Mindest-Drucks rechtzeitig ein Anfahren der Schmiermittel-Nachfüllstation 37 auslösen.

Bevorzugt sorgt die Steuereinrichtung dafür, dass der Verfahrschlitten 25 nach jedem Nachfüllvorgang einmal oder mehrmals zwischen den beiden Endlagen E1, E2 hin und her bewegt wird, bevor der reguläre Betrieb des Hochleistungs-Slicers 11 wieder aufgenommen wird. Auf diese Weise wird ein definierter Schmierfilm auf die Führungsstange 27 und die Führungs-/Antriebsspindel 29 aufgebracht.

Durch das automatische regelmäßige Nachschmieren entfällt ein umständliches und lästiges manuelles Nachschmieren durch einen Bediener des Hochleistungs-Slicers 11. Es versteht sich, dass ein erfindungsgemäßer Verfahrschlitten 25 in Verbindung mit einer Schmiermittel-Nachfüllstation 37 nicht nur für eine Produktzuführung eines Hochleistungs-Slicers 11 vorteilhaft ist, sondern auch in Verbindung mit anderen Lebensmittelverarbeitungseinrichtungen oder solchen Einrichtungen zugeordneten Transport- oder Fördereinrichtungen wie Einlegern oder Querverteilern günstige Wirkungen aufweisen kann.

### Bezugszeichenliste

- 11: Hochleistungs-Slicer
- 13: Produktzuführung
- 15: Auflagefläche
- 17: Lebensmittelprodukt
- 19: Produkthalter
- 21: Greifkrallen-Anordnung
- 25: Verfahrschlitten
- 27: Führungsstange
- 29: Führungs-/Antriebsspindel
- 31: Motor
- 33: Betriebsbereich
- 35: Nachfüllposition
- 37: Schmiermittel-Nachfüllstation
- 39: Schnittstelle
- 41: Schmiermittelkammer
- 42: Durchführung
- 43: Spindelmutter
- 44: Abstreifelement
- 45: Schmiermittelkanal
- 47: Schmiernippel
- 49: Schmiermittelbehälter
- 50: Schmiermittelpumpe
- 51: Mundstück
- 53: Mundstücksitz
- 55: Lagerbuchse

- Z: Produktförderrichtung
- S: Schneidebene
- E1: erste Endlage
- E2: zweite Endlage

## Patentansprüche

1. Produktzuführung (13) einer Vorrichtung (11) zur Verarbeitung von Lebensmittelprodukten (17), insbesondere eines Hochleistungs-Slicers (11), mit einem Verfahrschlitten (25), der durch eine Führung (27, 29) geführt ist und wenigstens eine Schmiermittelkammer (41) für Schmiermittel zum Schmieren der Führung (27, 29) aufweist,
**gekennzeichnet durch**
eine Schmiermittel-Nachfüllstation (37), welche derart von dem Verfahrschlitten (25) anfahrbar ist, dass über eine Schnittstelle (39) automatisch Schmiermittel aus einer Schmiermittelquelle (49) der Schmiermittel-Nachfüllstation (37) in die Schmiermittelkammer (41) des Verfahrschlittens (25) übertragen wird, wobei
eine Steuereinrichtung der Produktzuführung (13) dazu ausgebildet ist, bei Unterschreiten eines vorgegebenen Mindest-Füllstands oder Mindest-Drucks der Schmiermittelkammer (41) ein Anfahren der Schmiermittel-Nachfüllstation (37) **durch** den Verfahrschlitten (25) auszulösen.

2. Produktzuführung nach Anspruch 1,
**dadurch gekennzeichnet, dass**
die Schnittstelle (39) einen am Verfahrschlitten (25) vorgesehenen äußeren Schmiermitteleinlass (47), insbesondere Schmiernippel, und einen an der Schmiermittel-Nachfüllstation (37) vorgesehenen Schmiermittelauslass (51), insbesondere Mundstück, umfasst,

3. Produktzuführung nach Anspruch 2,
**dadurch gekennzeichnet, dass**
der äußere Schmiermitteleinlass (47) über einen Schmiermittelkanal (45) mit der Schmiermittelkammer (41) verbunden ist.

4. Produktzuführung nach einem der vorstehenden Ansprüche,
**dadurch gekennzeichnet dass**
die Steuereinrichtung dazu ausgebildet ist, nach einer vorgegebenen Anzahl von betrieblichen Verfahrzyklen des Verfahrschlittens (25) und/oder nach einer vorgegebenen Betriebszeitdauer ein Anfahren der Schmiermittel-Nachfüllstation (37) durch den Verfahrschlitten (25) auszulösen.

5. Produktzuführung nach einem der vorstehenden Ansprüche,
**dadurch gekennzeichnet dass**
sich eine Nachfüllposition (35), in die der Verfahrschlitten (25) zum Anfahren der Schmiermittel-Nachfüllstation (37) zu verfahren ist, außerhalb eines durch zwei Endlagen (E1, E2) definierten Betriebsbereichs (33) befindet, in welchem der Verfahrschlitten (25) während eines Betriebs der Produktzuführung (13) bewegt wird.

6. Produktzuführung nach einem der vorstehenden Ansprüche,
**dadurch gekennzeichnet, dass**
der Verfahrschlitten (25) an wenigstens einem Linearführungselement (27, 29), insbesondere einer Führungsschiene, Führungsstabge und/oder einer kombinierten Führungs-/Antriebsspindel, geführt ist.

7. Vorrichtung (11) zur Verarbeitung von Lebensmittelprodukten (17), insbesondere Hochleistungs-Slicer, welche wenigstens eine Produktzuführung (13) nach einem der vorstehenden Ansprüche umfasst.

## Claims

1. A product feed (13) of an apparatus (11) for processing food products (17), in particular of a high-performance slicer (11), having a moving carriage (25) which is guided by a guide (27, 29) and which has at least one lubricant chamber (41) for lubricant for lubricating the guide (27, 29),
**characterized by**
a lubricant refill station (37) which can be traveled to by the moving carriage (25) such that lubricant is automatically transferred from a lubricant source (49) of the lubricant refill station (37) into the lubricant chamber (41) of the moving carriage (25) via an interface (39), wherein
a control device of the product feed (13) is configured to trigger a traveling to the lubricant refill station (37) by the moving carriage (25) on a falling below of a predefined minimum filling level or minimum pressure of the lubricant chamber (41).

2. A product feed in accordance with claim 1,
**characterized in that**
the interface (39) comprises an outer lubricant inlet (47), in particular a lubrication nipple, provided at the moving carriage (25); and a lubricant outlet (51), in particular a mouthpiece, provided at the lubricant refill station (37).

3. A product feed in accordance with claim 2,
**characterized in that**
the outer lubricant inlet (47) is connected to the lubricant chamber (41) via a lubricant passage (45).

4. A product feed in accordance with any one of the preceding claims,
**characterized in that**
the control device is configured to trigger a traveling to the lubricant refill station (37) by the moving carriage (25) after a predefined number of operational travel cycles of the moving carriage (25) and/or after a predefined operating time.

5. A product feed in accordance with any one of the preceding claims,
**characterized in that**
a refilling position (35) into which the moving carriage (25) is to be traveled for traveling to the lubricant refill station (37) is located outside an operating region (33) which is defined by two end positions (E1, E2) and in which the moving carriage (25) is moved during operation of the product feed (13).

6. A product feed in accordance with any one of the preceding claims,
**characterized in that**
the moving carriage (25) is guided at at least one linear guide element (27, 29), in particular at a guide rail, at a guide bar and/or at a combined guide/drive spindle.

7. An apparatus (11) for processing food products (17), in particular a high-performance slicer, which comprises at least one product guide (13) in accordance with any one of the preceding claims.

## Revendications

1. Dispositif d'amenée de produit (13) d'un appareil (11) pour le traitement de produits alimentaires (17), en particulier d'une trancheuse à haute performance (11), comprenant un chariot en translation (25) qui est guidé par un guidage (27, 29) et qui comprend au moins une chambre à lubrifiant (41) pour un lubrifiant destiné à lubrifier le guidage (27, 29),
**caractérisé par**
une station de reremplissage de lubrifiant (37) à laquelle peut s'approcher le chariot en translation (25) de telle façon qu'un lubrifiant est automatiquement transféré, via une interface (39), depuis une source de lubrifiant (49) de la station de reremplissage de lubrifiant (37) jusque dans la chambre à lubrifiant (41) du chariot en translation (25), dans lequel
une unité de commande du dispositif d'amenée de produit (13) est réalisée, lors du passage au-dessous d'un niveau de remplissage minimum prédéterminé ou d'une pression minimum dans la chambre à lubrifiant (41), pour déclencher une approche du chariot en translation (25) vers la station de reremplissage de lubrifiant (37).

2. Dispositif d'amenée de produit selon la revendication 1,
**caractérisé en ce que** l'interface (39) inclut une entrée extérieure de lubrifiant (47) prévue sur le chariot en translation (25), en particulier un nipple de lubrification, et une sortie de lubrifiant (51) prévue sur la station de reremplissage de lubrifiant (37), en particulier une pièce d'embouchure.

3. Dispositif d'amenée de produit selon la revendication 2,
**caractérisé en ce que** l'entrée extérieure de lubrifiant (47) est reliée à la chambre à lubrifiant (41) via un canal à lubrifiant (45).

4. Dispositif d'amenée de produit selon l'une des revendications précédentes,
**caractérisé en ce que** l'unité de commande est réalisée, après un nombre prédéterminé de cycles de translation en service du chariot en translation (25), et/ou après une durée de fonctionnement prédéterminée, pour déclencher une approche du chariot en translation (25) vers la station de reremplissage de lubrifiant (37).

5. Dispositif d'amenée de produit selon l'une des revendications précédentes,
**caractérisé en ce qu'**une position de reremplissage (35), à laquelle il s'agit de déplacer le chariot en translation (25) pour l'approche de la station de reremplissage de lubrifiant (37), se trouve à l'extérieur d'une zone de service (33) définie par deux positions finales (E1, E2), dans laquelle le chariot en translation (25) est déplacé pendant un fonctionnement du dispositif d'amenée de produits (13).

6. Dispositif d'amenée de produit selon l'une des revendications précédentes,
**caractérisé en ce que** le chariot en translation (25) est guidé sur au moins un élément de guidage linéaire (27, 29), en particulier un rail de guidage, une barre de guidage et/ou une broche de guidage et d'entraînement combinée.

7. Appareil (11) pour le traitement de produits alimentaires (17), en particulier trancheuse à haute performance, qui inclut au moins un dispositif d'amenée de produits (13) selon l'une des revendications précédentes.
